# EUROPÄISCHE PATENTSCHRIFT

(11) **EP 0 550 792 B1**
(45) Veröffentlichungstag und Bekanntmachung des Hinweises auf die Patenterteilung: **12.04.1995**
(21) Anmeldenummer: 92111754.5
(22) Anmeldetag: 10.07.1992
(51) Int. Cl.: A61C 11/08

(54) **Befestigungseinrichtung für Zahnersatz-Modelle**
Mounting device for dental models
Dispositif de fixation pour modèles dentaires

(30) Priorität: 07.01.1992 DE 9200094 U
(43) Veröffentlichungstag der Anmeldung: 14.07.1993
(73) Patentinhaber: KRAEHER ZAHNTECHNIK GmbH, D-22765 Hamburg (DE)
(72) Erfinder: Kräher, Ralf, W-2000 Hamburg 50 (DE)
(74) Vertreter: DIEHL GLAESER HILTL & PARTNER

(56) Entgegenhaltungen:
- WO-A-86/03959
- DE-U- 9 104 167
- US-A- 3 221 408

## Beschreibung

Die Erfindung bezieht sich auf eine Befestigungseinrichtung für ein Kiefer-Gips-Modell und einen Artikulationssockel oder dergleichen bei der Zahnersatzherstellung, mit einem Magneten im Sockel und einem magnetischen, deckelartigen Teil im Modell oder umgekehrt.

Eine derartige Befestigungseinrichtung ist aus der WO-A-8 603 959 (Fig. 6) bekannt.

In der Technik der Herstellung von Zahnersatz wird seitens des Zahnarztes vom Ober- oder Unterkiefer ein Abdruck oder Abguß hergestellt und dem Zahntechniker zur Anfertigung des Zahnersatzes übergeben. Der Zahntechniker stellt von dem seitens des Zahnarztes hergestellten Abdruck ein Gipsmodell her, in welches er einen magnetischen Teil mit eingipst, wenn er ein magnetisches Befestigungsverfahren wählt. Mit Hilfe des magnetischen Teils im Gipsmodell können die gewünschten Verbindungen mit Artikulatoren hergestellt werden.

Retentionsmetallplatten und -metallhülsen gibt es in der Zahntechnik bereits seit geraumer Zeit, um Modelle zueinander und/oder in Artikulatoren oder anderen Hilfsgeräten definiert anzuordnen und bequem entnehmen zu können. Diese Platten sind zum einen sehr teuer, zum anderen verbleiben sie in den Modellen und somit in den Praxen oder verschwinden im Abfall.

Der Erfindung liegt die Aufgabe zugrunde, eine Befestigungseinrichtung der eingangs genannten Art mit einfachsten Teilen zu realisieren.

Bei der Befestigungseinrichtung gemäß der vorliegenden Erfindung wird eine ebene Metallfläche an einer Art Metallhülse realisiert, die gute Retentionseigenschaften in Gipsmodellen bewirkt, weil ausreichend große Angriffsflächen für Magneten geboten werden.

Gemäß der Erfindung wird praktisch von einem herkömmlichen Kronenkorken für Flaschen ausgegangen, dessen Metallteil Formwerkzeugen entsprechend so verformt wird, daß eine ebene Fläche entsteht und somit die Magnetwirkung um ein Vielfaches heraufgesetzt werden kann.

Im einzelnen gehen die Maßnahmen der vorliegenden Erfindung aus dem kennzeichnenden Teil des Patentanspruches hervor.

Die Erfindung wird nachstehend anhand der Zeichnung beispielsweise erläutert.
- Fig. 1: zeigt eine Draufsicht auf den deckelartigen Teil der Befestigungseinrichtung gemäß der Erfindung.
- Fig. 2: zeigt eine Seitenansicht dieses deckelartigen Teiles.

Bei Betrachtung der Figuren erkennt man die Ähnlichkeit mit dem Metallteil eines Kronenkorkens für Flaschen, allerdings sind wesentliche Änderungen einem solchen Teil gegenüber festzustellen. Mit 10 ist eine Fläche bezeichnet, welche in einer einzigen Ebene liegt (bei einem Flaschen-Kronenkorken wäre diese Fläche etwas gewölbt, also domförmig ausgestaltet).

Mit 11 ist der äußere Rand des deckelartigen Teiles bezeichnet, welcher im Vergleich zu einem Kronenkorken mit radial, relativ weit nach außen vorspringenden Teilen ausgestattet ist. Dies ist darauf zurückzuführen, daß gemäß der Erfindung das Ausgangsmaterial zwischen zwei zusammenwirkenden ebenen Flächen verformt wird, so daß die Randfaltenteile sich nur in radialer Richtung weiter verformen können.

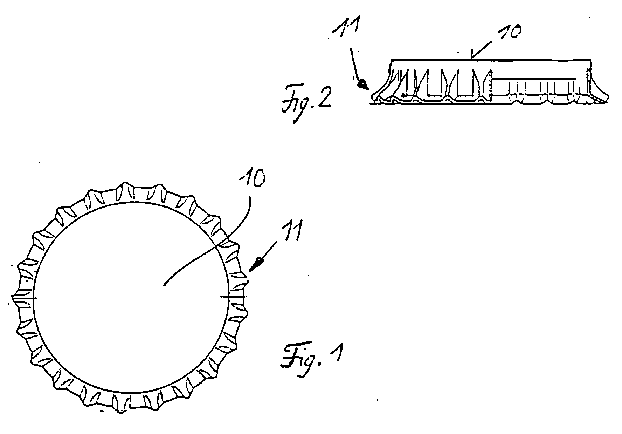

Bei der in der Figur 2 gezeigten Ausführungsform ist zu erkennen, daß das Presswerkzeug mit zwei zueinander parallelen Arbeitsflächen ausgebildet ist, die von oben und von unten her wirksam sind. Es ist jedoch nicht zwingend erforderlich, derartige zueinander parallele Arbeitsflächen beim Fressen des Metallteils der Befestigungseinrichtung gemäß der Erfindung zu verwenden, sondern es könnten auch zueinander leicht geneigte Arbeitsflächen der Presswerkzeuge eingesetzt werden.

Es liegt im Rahmen der Erfindung, derartig verformte Kronenkorkenteile mit ebener Fläche zur Befestigung anderer Teile einzusetzen, z.B. als Befestigungsmittel für eine sogenannte Pinnwand.

## Patentansprüche

1. Befestigungseinrichtung für ein Kiefer-Gipsmodell und einen Artikulationssockel oder dergleichen bei der Zahnersatzherstellung, mit einem Magneten im Sockel und einem magnetischen, deckelartigen Teil im Modell oder umgekehrt, dadurch gekennzeichnet, daß das magnetische, deckelartige Teil (10) im Modell bzw. Sockel ähnlich einem Kronenkorken für Flaschen ausgebildet ist, welches durch Zusammendrücken zwischen zwei Presswerkzeugen einer hydraulischen Presse hergestellt ist.

## Claims

1. Mounting device for a plaster jaw model and an articulation base or the like for dental production, with a magnet in the base and a magnetic cover-like part in the model, or vice versa, characterized in that the magnetic cover-like part (10) in the model or the base is designed similar to a crown cap for bottles that is produced by compression between two pressing tools of a hydraulic press.

## Revendications

1. Dispositif de fixation d'un modèle de mâchoire en plâtre et d'un socle d'articulation ou analogue, dans le domaine de l'obtention de dents artificielles, comportant un aimant dans le socle et un élément magnétique en forme de couvercle dans le modèle, ou inversement,
caractérisé en ce que l'élément magnétique en forme de couvercle prévu dans le socle ou dans le modèle est constitué comme un bouchon couronne pour bouteille, qui est obtenu par pressage entre deux outils de pressage d'une presse hydraulique.
